Europäisches Patentamt

European Patent Office

Office européen des brevets

(11) Veröffentlichungsnummer: **0 460 369 A1**

# (12) EUROPÄISCHE PATENTANMELDUNG

(21) Anmeldenummer: **91104988.0**

(22) Anmeldetag: **28.03.91**

(51) Int. Cl.5: **B26F 1/28**

(30) Priorität: **07.06.90 DE 4018209**

(43) Veröffentlichungstag der Anmeldung:
**11.12.91 Patentblatt 91/50**

(84) Benannte Vertragsstaaten:
**BE DE FR NL**

(71) Anmelder: **SOFTAL electronic GmbH**
**Friedrich-Ebert-Damm 202a**
**W-2000 Hamburg 70(DE)**

(72) Erfinder: **Grosse, Werner**
**Steinstrasse 50**
**W-4355 Waltrop(DE)**

(74) Vertreter: **von Raffay, Vincenz, Dipl.-Ing. et al**
**Patentanwälte Raffay, Fleck & Partner**
**Postfach 32 32 17**
**W-2000 Hamburg 13(DE)**

(54) **Verfahren und Vorrichtung zum elektroerosiven Perforieren von Zigarettenpapier.**

(57) Das Verfahren und die Vorrichtung zum elektroerosiven Perforieren von Zigarettenpapier arbeitet grundsätzlich mit mindestens zwei Elektrodenpaaren, die gleichzeitig so gezündet werden, daß jeder Perforationsabschnitt zweimal behandelt wird, um unter Berücksichtiung der Zünddauer und der Bahngeschwindigkeit für eine entsprechende Perforationsintensität zu sorgen. Insbesondere arbeitet die Erfindung mit mindestens vier Elektrodenpaaren (I bis IV), zwischen denen die zu perforierende Bahn (10) aus Zigarettenpapier hindurchbewegt wird. Das Zigarettenpapier wird in Längsrichtung der später herzustellenden Zigarette bewegt, wobei die Breite dem Umfang der Zigarette zuzüglich eines Überlappungsabschnittes zum Kleben entspricht. Die Perforierung erfolgt quer zur Bewegungsrichtung, d.h. es entsteht ein genau definierter Zonenabschnitt um den Umfang der Zigarette herum. Die Elektrodenpaare sind in einem Abstand angeordnet, der, wenn vier Elektrodenpaare eingesetzt sind, der halben Zigarettenlänge (a, b, c) entspricht.

Das erste und das dritte Elektrodenpaar werden gleichzeitig gezündet. Durch eine wegabhängige Steuerung werden das zweite und vierte Elektrodenpaar ebenfalls gleichzeitig gezündet, wenn die davor perforierten Abschnitte den Weg einer halben Zigarettenlänge zurückgelegt haben. Jeder Abschnitt wird vierfach perforiert, wobei die Geschwindigkeit, mit der die Bahn (10) bewegt werden kann, nicht durch den Abstand (halbe Zigarettenlänge) der Elektrodenpaare festgelegt ist, sondern durch den Abstand der jeweils gleichzeitig gezündeten Elektrodenpaare (eine Zigarettenlänge). Hierdurch ist eine gleichmäßige, intensive und sehr leistungsfähige Perforation möglich und das behandelte Zigarettenpapier kann in Längsrichtung der Zigarette der weiterverarbeitenden Zigarettenmaschine kontinuierlich zugeführt werden.

Fig.2

Die Erfindung betrifft ein Verfahren nach dem Oberbegriff des Patentanspruches 1 und eine Vorrichtung zur Durchführung des Verfahrens nach dem Oberbegriff des Patentanspruches 2.

Unter dem Begriff "Zigarettenpapier" werden insbesondere Zigarettenumhüllungspapiere, Mundstückbelagpapiere und Filterpapierbahnen verstanden, wie sie zur Herstellung von Zigaretten verwendet werden. Darüberhinaus ist die Erfindung ebenso zum Perforieren von Filterpapierbahnen, Fließbahnstoffen und dergleichen mehr vorteilhafterweise einsetzbar.

Es sind die unterschiedlichsten Verfahren und Vorrichtungen zum Perforieren von Zigarettenpapieren, d.h. von Zigarettenumhüllungspapieren und Mundstückbelagpapieren bekannt. Die Perforierung kann mechanisch, elektroerosiv oder durch Laserperforation erfolgen. Die bekannten Verfahren und Vorrichtungen führen eine Perforation in Längsrichtung durch. Solche Verfahren sind beispielsweise aus der DE-OS 25 31 285, der DE-OS 27 40 613 und der EP-OS 56 223 bekannt.

Die bekannten Verfahren arbeiten in der Regel so, daß die Perforation in Längsrichtung erfolgt. Dieses erfordert nach der Perforation weitere Bearbeitungsschritte durch Schneiden, Umwickeln und dergleichen.

Der Erfindung liegt nun die Aufgabe zugrunde, ein Verfahren und eine Vorrichtung der eingangs genannten Art zu schaffen, bei dem das zu schmalen Bahnen bereits zugeschnittene Zigarettenpapier, beispielsweise Zigarettenumhüllungspapier, in der dem Umfang der fertigen Zigarette entsprechenden Breite fortlaufend, d.h. quer zu dieser Breite, perforiert werden kann, so daß quer über das Zigarettenpapier - d.h. um den Umfang der späteren Zigarette - eine nach Lage und Breite genau definierte Perforationszone entstehen.

Diese Aufgabe wird grundsätzlich durch das Kennzeichen des Anspruches 1 bei einem entsprechenden Verfahren und durch das Kennzeichen des Anspruches 3 bei der entsprechenden Vorrichtung gelöst. Besonders vorteilhafte Ausführungsformen sind Gegenstand der Ansprüche 2 bzw. 4.

Erfindungsgemäß erfolgt grundsätzlich eine Perforation quer zur Bewegungsrichtung und durch die Anordnung von mindestens zwei Elektrodenpaaren hintereinander, jeweils zweifach, d.h. die Perforation wird in zwei Schritten durchgeführt.

Hierdurch ist eine schnelle und rationelle Arbeitsweise möglich und es wird gleichzeitig eine Perforation in hoher Qualität erzeugt.

In vorteilhafter Weise wird das Zigarettenpapier in der dem Umfang der Zigarette entsprechenden Breite in Zigarettenlängsrichtung durch mindestens vier quer zur Bewegungsrichtung verlaufende Elektrodenpaare hindurchbewegt. Es erfolgt also eine Perforation quer zur Bewegungsrichtung und damit quer über das Zigarettenpapier, d.h. um den Umfang der später hergestellten Zigarette. Durch die vier oder um ein gerades Vielfaches von zwei vermehrten Elektroden erfolgt eine Mehrfachperforation, die den gewünschten Perforationsgrad sicherstellt. Durch die gleichzeitige Zündung des jeweils ersten und dritten sowie zweiten und vierten Elektrodenpaares wird eine hohe Geschwindigkeit des Zigarettenpapier und damit ein entsprechend hoher Wirkungsgrad gewährleistet. Die gleichzeitig gezündeten Elektroden weisen voneinander einen relativ großen Abstand auf, obwohl die Elektroden insgesamt dicht beieinander angeordnet sind. Trotz hoher Fördergeschwindigkeit des Zigarettenpapiers ist eine kompakte Bauweise und eine intensive Perforation gewährleistet.

Wenn, wie in der Praxis meistens der Fall, vier Elektrodenpaare verwendet werden, dann erfolgt eine Vierfachperforation, wobei aber immer nur zwei in einem Abstand von einer Zigarettenlänge angeordnete Elektrodenpaare gleichzeitig gezündet werden und zwar abwechselnd mit den um eine halbe Zigarettenlänge dazwischen angeordneten Elektrodenpaaren.

In vorteilhafter Weise sind die Elektrodenpaare mit Entladungsstiften so angeordnet und aufgebaut, wie in Anspruch 3 angegeben. Durch die Querverstellung sind die Entladungsstifte quer zur Bewegungsrichtung des Zigarettenpapiers versetzt, wodurch eine gleichmäßige und dichte Lochverteilung innerhalb der vorgegebenen Perforationsbreite gewährleistet ist.

Die Steuerung der Zündung erfolgt inkremental und somit wegabhängig, so daß der Abstand der Perforationsabschnitte entsprechend der Zigarettenlänge und unabhängig von der Bahngeschwindigkeit genau eingehalten wird.

Im folgenden wird die Erfindung unter Hinweis auf die Zeichnung anhand eines Ausführungsbeispieles näher erläutert.

Es zeigt:

Fig. 1    eine Seitenansicht quer zur Bewegungsrichtung des Zigarettenpapiers auf ein Elektrodenpaar;

Fig. 2    eine schematische Draufsicht auf vier Elektrodenpaare, zwischen denen ein Zigarettenpapier hindurchbewegt wird, zur Veranschaulichung der aufeinderfolgenden Mehrfachperforation;

Fig. 3    eine schematische Darstellung zur Verdeutlichung der Mehrfachperforation in Verbindung mit Fig. 2;

Fig. 4    eine schematische Darstellung des Weg- und Zeitablaufs der einzelnen Perforationsphasen

2

und die Erzeugung der Zonenbreiten;

Fig. 5      eine schematische Darstellung zur Erläuterung der Zonebreitenbestimmung durch Einzelimpulse;

Fig. 6      eine der Fig. 3 entsprechende Darstellung, jedoch zur Erläuterung der Erzeugung mehrerer Perforationsreihen oder -Streifen quer zur Bewegungsrichtung, aber innerhalb einer Perforationsgruppe;

Fig. 7      eine schematische Darstellung der elektrischen Impulsfolge zur speziellen Beschaltungsreihenfolge der Elektrodenstifte bei einer Ausführungsform mit vier Elektrodenpaaren;

Fig. 8      eine schematische Darstellung dieser besonderen Stiftzusammenschaltung eines jeden Elektrodenpaares;

Fig. 9      eine den Fig. 3 und 6 entsprechende Darstellung, jedoch zur Veranschaulichung einer unterschiedlichen Perforationsprofilierung über die Zigarettenlänge; und

Fig.10      eine der Fig. 4 entsprechende Darstellung zur Erläuterung des elektrischen Ablaufschemas in Verbindung mit der Behandlung nach Fig. 9.

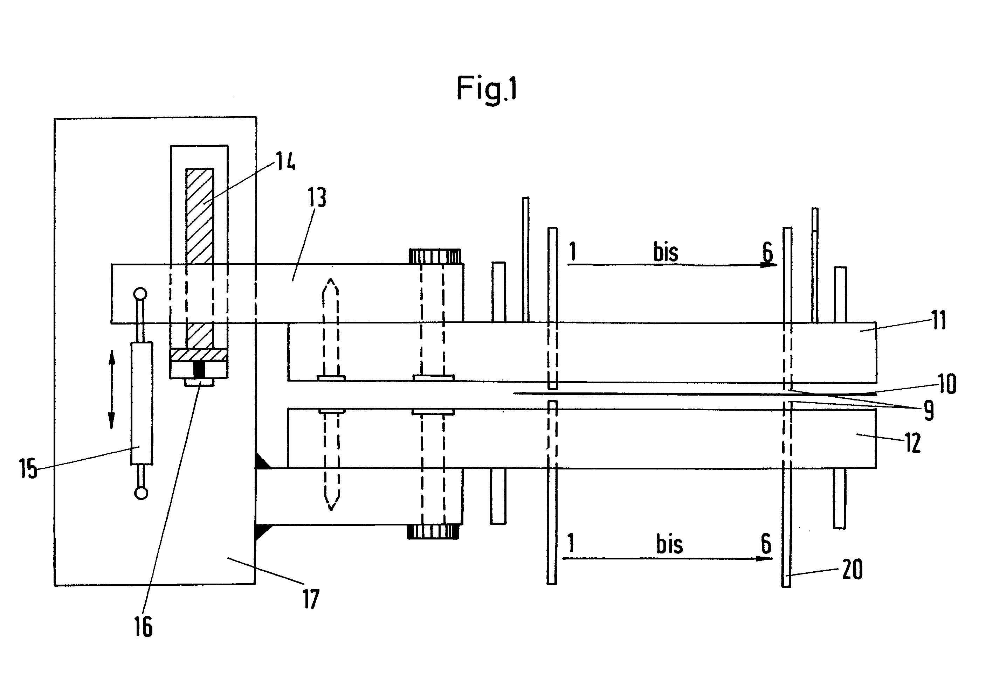

Die in der Zeichnung dargestellte Vorrichtung weist insgesamt vier Elektrodenpaare I bis IV auf, die jeweils so aufgebaut sind, wie in Fig. 1 dargestellt.

Ober- und Unterelektrode 11 und 12 sind an einer beweglichen und festen Halteplatte 13 und 17 angebracht. Die obere Elektrode 11 ist mit Hilfe eines pneumatischen Zylinders 15 und einer Führung 14 auf- und abbewegbar. Ein einstellbarer Anschlagstift 16 ermöglicht die Einstellung des Abstandes der Elektroden. Die zu perforierende Bahn, d.h. das Zigarettenpapier, ist mit 10 bezeichnet. Über den Verstellmechanismus ist die obere Elektrode mit der mechanischen Aufnahme 13 verbunden.

Beide Elektroden sind mit Entladungsstiften 20 versehen, von denen bei der dargestellten Ausführungsform für jede Elektrode sechs vorhanden und mit 1 bis 6 durchnumeriert sind. Die Entladungsstiftanordnung ist quer zur Bewegungsrichtung des zu perforierenden Zigarettenpapiers 10 ausgeführt und arbeitet mit Zündfunkenüberschlägen 9.

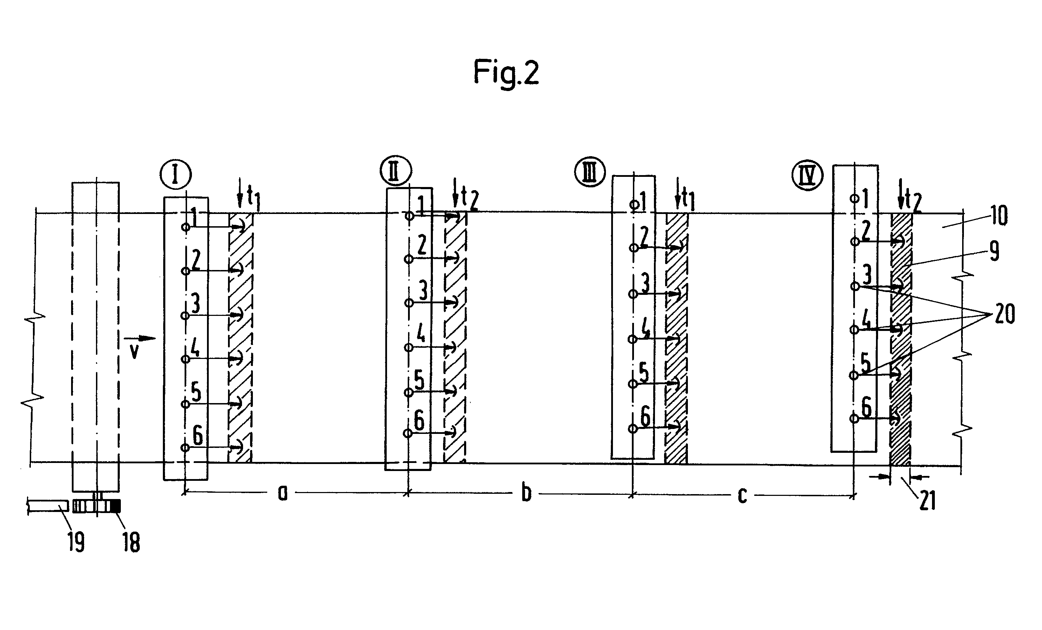

Beim Betrachten der Fig. 2 ergibt sich deutlich, daß die Entladungsstifte 20 - im einzelnen mit 1 bis 6 bezeichnet - quer zur Bewegungsrichtung V des Zigarettenpapiers 10 versetzt angeordnet sind, um so für eine gute Verteilung und Vergleichmäßigung der einzelnen Löcher über die vorgesehene Zonenbreite zu sorgen.

In Fig. 2 ist ein Wegstreckenzähler 18 mit einem Initiator 19 angedeutet. Dieser Wegstreckenzähler oder wahlweise auch ein externes Triggersignal von der Zigarettenmaschine, löst die Zündung der Elektroden aus und zwar derart, daß immer die Elektroden I und III sowie II und IV jeweils gleichzeitig und abwechselnd gezündet werden, und zwar in Abhängigkeit von dem zurückgelegten Weg, der einer halben Zigarettenlänge entspricht. Die in Fig. 2 vermerkten Abstände a, b und c sind gleich und entsprechen jeweils einer halben Zigarettenlänge.

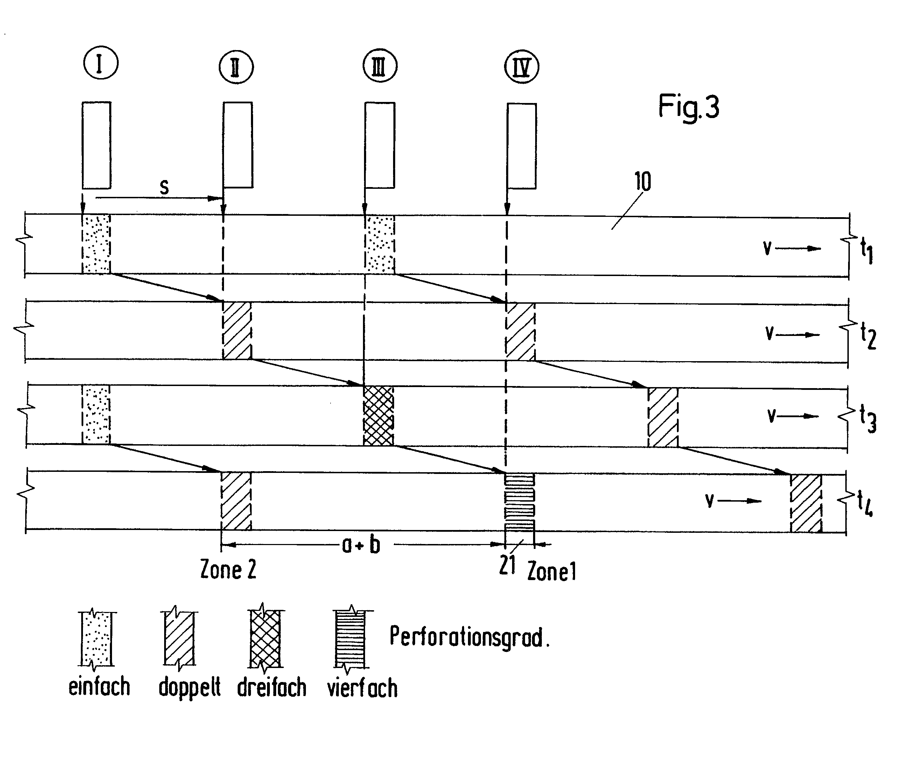

Unter Berücksichtigung der Fig. 3 wird deutlich, daß bei der ersten Zündung nach dem Einlauf einer bisher nicht perforierten Bahn aus Zigarettenumhüllungspapier, d.h. zum Zeitpunkt t1, die beiden Elektrodenpaare I und III eine erste Perforation durchführen, die hinsichtlich des unten in Fig. 3 dargestellten Perforationsgrades eine Einfachperforation ist. Nach Zurücklegen einer halben Zigarettenlänge erreichen die einfachperforierten Abschnitte zum Zeitpunkt t2 die Elektrodenpaare II und IV. Hier erfolgt die zweite Perforation, so daß nunmehr eine Zweifachperforation vorhanden ist. Zum Zeitpunkt t3, nach dem Zurücklegen einer weiteren halben Zigarettenlänge, werden die Elektrodenpaare I und III erneut gezündet, so daß der neu in den Bereich des Elektrodenpaares I eingelaufene Abschnitt einfach und der im Bereich des Elektrodenpaares III bewegte Abschnitt dreifach perforiert wird. Zum Zeitpunkt t4 erfolgt dann mit Zündung der Elektroden II und IV die Vierfachperforation des zum Zeitpunkt t1 im Bereich des Elektrodenpaares I einfachperforierten Abschnittes. Bei fortlaufendem Betrieb entstehen somit immer vierfachperforierte Abschnitte in einem Abstand, der einer Zigarettenlänge entspricht. Die Breite der Zigarettenpapierbahn entspricht dem Umfang der später herzustellenden Zigarette zuzüglich Überlappungsabschnitt zum Kleben. Die Bahn kann also kontinuierlich und fortlaufend ohne weitere Handhabungen der Zigarettenmaschine zugeführt werden.

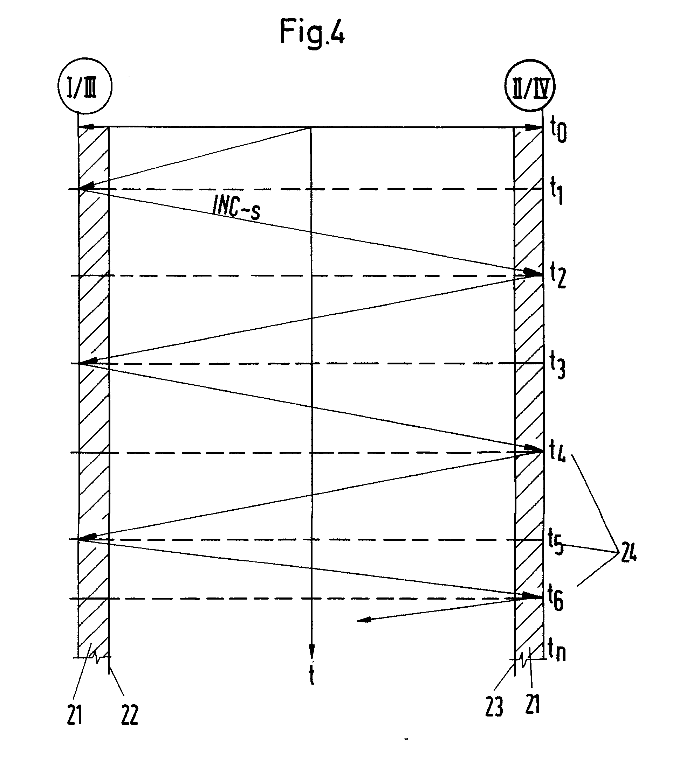

Um die vorgegebene Zonenbreite 21 zu allen Perforationsphasen und Zeitpunkten bei dem Durchfahren eines jeden Elektrodenpaares exakt einzuhalten, wird vorzugsweise ein digitaler Vorwahlzähler mit zwei Inkrementwertsetzungen angewandt. Der inkrementproportionale Weg- und Zeitablauf ist in Fig. 4 dargestellt.

Nach dem Startzeitpunkt $t_0$ erreicht die Zigarettenpapierbahn zum Zeitpunkt $t_1$ die Elektrode I bzw. III, womit gleichzeitig die Erstperforationsphase beginnt. Nunmehr erfolgen bei der Weiterbewegung der Bahn innerhalb des in Laufrichtung vorgegebenen Perforationsbereiches 21 mehrere sequenzielle Einzelzündungen, welche die vorgebbare Zonenbreite bestimmen. Diese Einzelzündungen sind dann innerhalb eines

EP 0 460 369 A1

jeden Perforationsvorganges abgeschlossen und die gewünschte Zonenbreite in Laufrichtung erreicht, wenn der Inkrementzähler den gekennzeichneten Zählbereich 21 von I/III nach II/IV bei 22 und respektive für die Elektrodenpaare II/IV von II/IV nach I/III bei 23 verlassen hat.

Wie aus dem Ablauf nach Fig. 4 zu ersehen ist, findet immer eine wegabhängige Perforationsphasenwiederholung statt, die unabhängig von der Bahngeschwindigkeit und ggf. deren Variation wie unter 24 arbeitet.

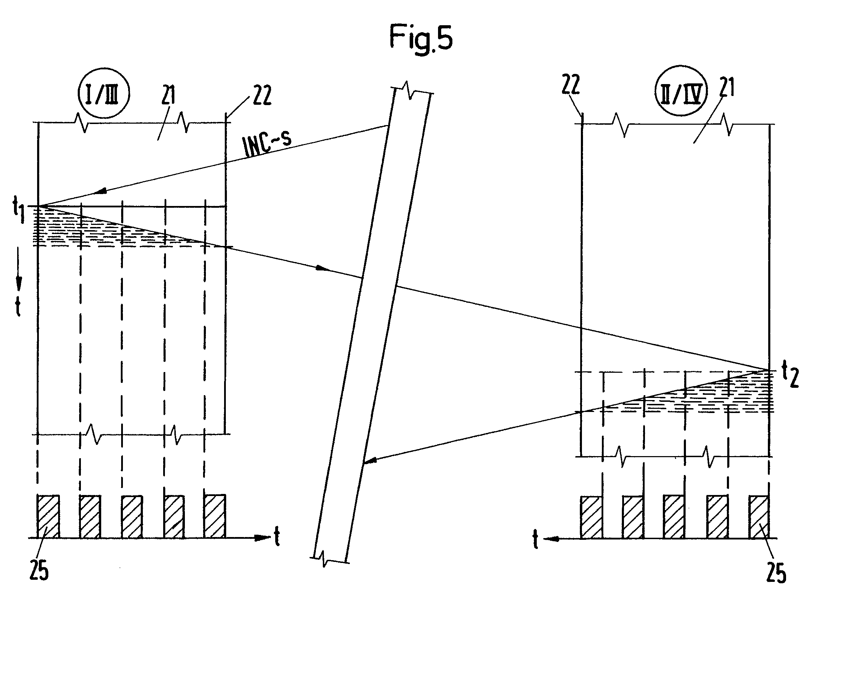

Des weiteren ist die Lochdichte und somit der Gesamtperforationsgrad als Summe aller Perforationseinzelphasen innerhalb einer jeden Zone und deren in Laufrichtung vorgegebener Breite in der Weise einstell- und auch regelbar, daß durch eine Mehrfachauflösung der Weginkremente und damit gesteuerter, sequenziell folgender Einzelzündungen, innerhalb des unter Fig. 4 und mit 21 gekennzeichneten Zonenbereiches stattfinden. Eine weitere Verdeutlichung dieses sich immer wiederholenden Perforationsphasenablaufes ist unter Fig. 5 dargestellt, wobei die genannten Einzelimpulse mit 25 gekennzeichnet sind. Mit der Inkrementbereichssetzung von 22 läßt sich somit jede beliebige Zonenbreite im Bereich von 1,0 -... 20 mm mit der geometrischen Auflösung von vorzugsweise 0,1 mm eines einzelnen Weginkrementes voreinstellen und einhalten.

Darüber hinaus besteht die Möglichkeit, durch das externe Maschinentriggersignal die Perforationsphaseneinleitung und deren wegbetragsabhängige Wiederholung anstelle des Wegstreckenzählers und Indikators 18/19 zu benutzen. Dieses zeitabhängige Triggersignal wird hierbei auf der Grundlage seiner Wiederholungsfrequenz und dem festen geometrischen Abstand zwischen der Querperforationseinrichtung und seinen Elektrodenabständen zur Zigarettenmaschine durch eine elektrische Steuerungseinrichtung nach der Formelableitung: $v = \frac{s}{t}$ so umgeformt, daß sich hieraus ein wegproportionales Signal mit hoher Inkrementauflösung erzeugen läßt.

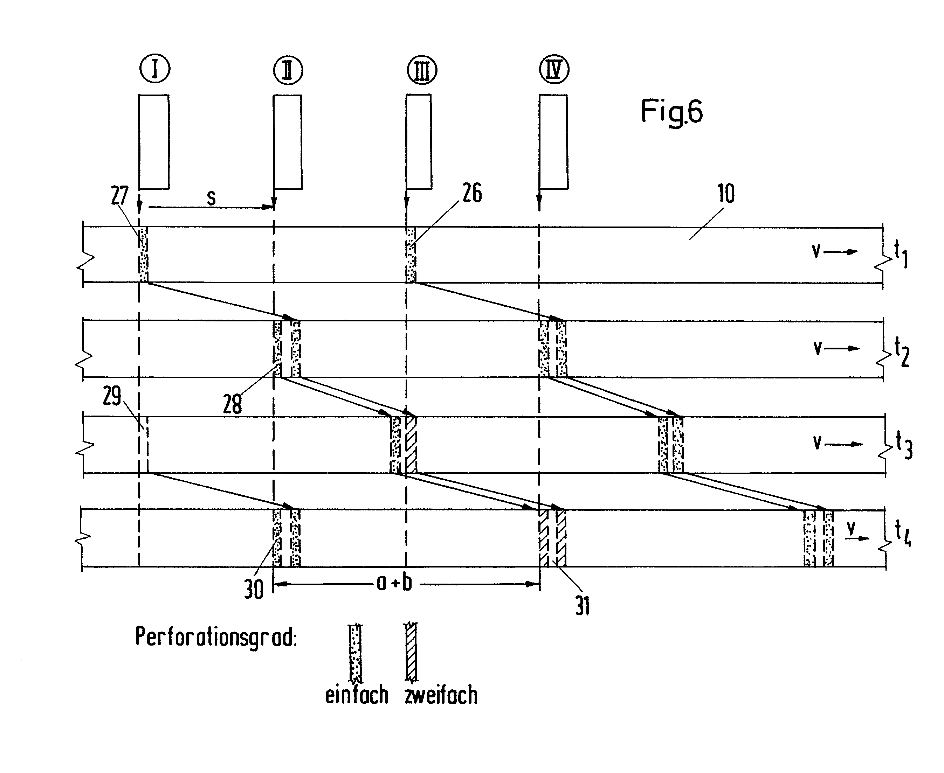

Durch eine indirekte Aufeinanderfolge dieser zuvor genannten und unter Fig. 5 erklärten Einzelperforationsphasen lassen sich nach dieser Methode auch mehrere, direkt in Laufrichtung hintereinanderfolgende Querzonenreihen als eine zusammengehörende Perforationsgruppe über den Umfang der durchlaufenden Zigarettenpapierbahn einbringen. Diese Querzonenreihenperforation ist unter Fig. 6 dargestellt, wobei die erste Zonenreihe der Zone 1 mit 27 bzw. deren zweite Zonenreihe mit 28 gekennzeichnet ist. Für die danach folgende Zone 2 ist dies mit 29 bzw. 30 definiert.

Innerhalb der einzelnen Perforationsphasen erfolgen die Einzelperforationen für die erste Querzonenreihe 27 immer über die Elektroden I/III und respektive für die zweite Querzonenreihe 28 mit II/IV gemäß dem aufgezeichneten Ablaufschema. Bei der ausgeführten Anordnung von insgesamt vier Elektrodenpaaren lassen sich somit pro Perforationsgruppe 31 mindestens zwei, zweifachdurchperforierte Querzonenreihen in die durchlaufende Zigarettenpapierbahn 10 einbringen. Steuerungstechnisch und durch eine Kaskadierung der Elektrodenanordnung kann die Anzahl dieser Querzonenreihen sowie deren Perforationsgrad in Form von Mehrfachdurchperforierungen beliebig erhöht werden. Die mit 26 gekennzeichnete Erstperforationszone ist aufgrund der definierten Perforationsablaufkonventionen nicht verwendbar.

Durch die nach diesem Verfahren elektroerosiv erzeugte Querzonenreihenanordnung lassen sich auch gleichzeitig die Vorteile einer besseren Luftventilation durch eine räumlich wählbare Perforationsreihenaufteilung innerhalb einer Zonengruppe erreichen, was bisher nur durch mechanische oder Laserperforationsverfahren möglich war.

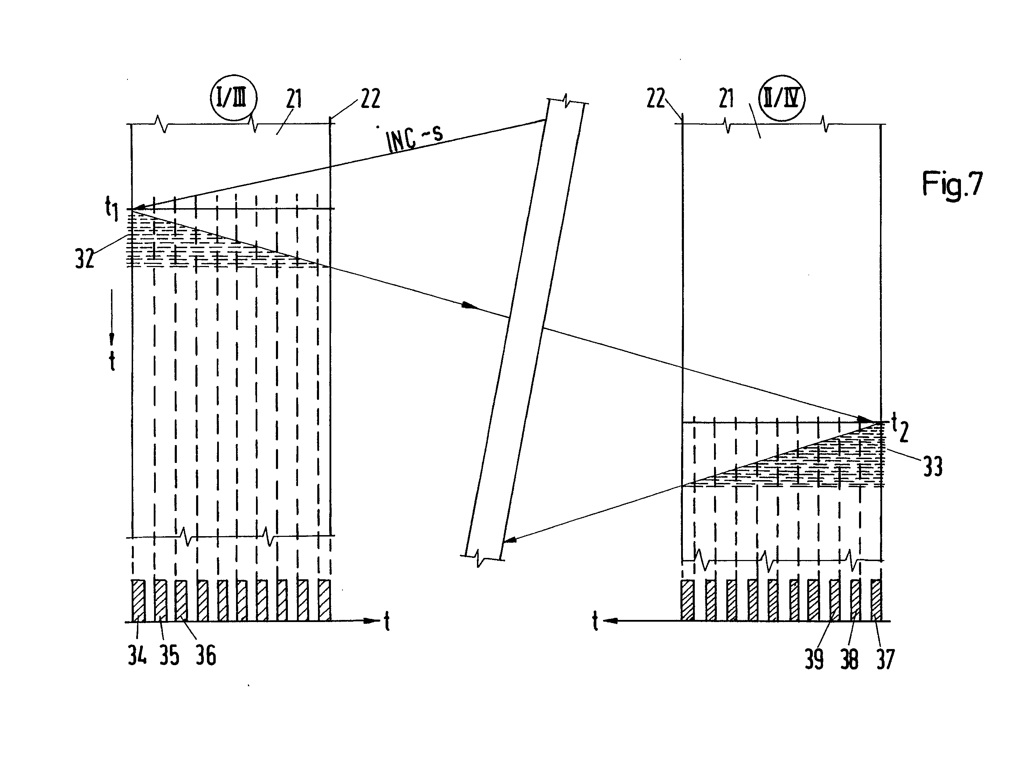

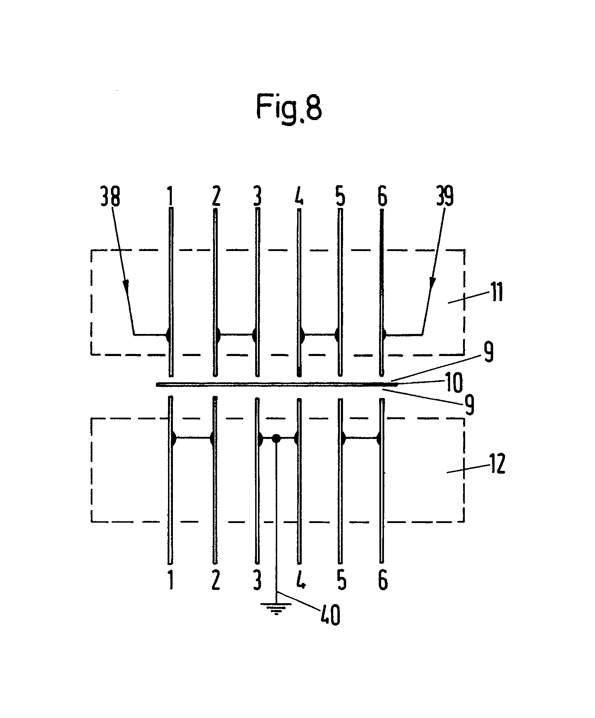

Eine weitere Variante und Erweiterung dieses beschriebenen Verfahrens und dessen Vorrichtung besteht darin, daß durch eine besondere elektrische Zusammenschaltung der einzelnen Elektrodenstifte eines jeden Elektrodenpaares, welche aus der oberen und unteren Elektrode 11/12 bestehen, eine gruppenweise zeit- und perforationsphasenversetzte Zündung möglich ist. Dies hat den Vorteil, daß die Einzeltaktrate aller Elektrodenstifte um den Faktor dieser Stiftkombinationen reduzierbar ist. Damit sinkt die thermische Belastung der Einzelstifte und deren Belegung mit anorganischen Zigarettenpapierrückständen, wodurch die Stiftbesatzreduktion gefördert wird. Gleichzeitig hat dieses Perforationssystem aufgrund der separierten Einzelhochspannungsleistungselemente eine exzellente Redundanz und damit eine technische hohe Ausfallsicherheit. Die im weiteren auf der Grundlage von Fig. 7 und Fig. 8 beschriebene Verfahrens- und Vorrichtungsvariante ist selbstverständlich für beide zuvor explizit dargelegten Querzonenanordnungen und deren Perforationszonenbilder anwendbar.

Wie aus Fig. 1 und 8 zu ersehen ist, sind die hier vorzugsweise eingesetzten Elektrodenpaare mit jeweils sechs Elektrodenstiften versehen. Diese können elektrisch in der Weise zusammengeschaltet sein, daß sich innerhalb einer jeden Elektrode zwei mäanderförmig zusammengehörende Stiftgruppen von zweimal drei Stiften ausbilden. Hierbei wird jede Stiftgruppe mit einem Hochspannungsanschluß 38 und 39 getrennt versorgt und am unteren Stiftgruppenmittelpunkt 40 geerdet. Auf diese Weise sind beliebige Stiftkombinationen innerhalb eines Elektrodenpaares zeitversetzt zündbar, was die o.g. Vorteile bezüglich der zuvor erläuterten Einzelperforationsphasen ermöglicht.

4

Der zeitliche Ablauf innerhalb der sich zyklisch wiederholenden Einzelperforationsphasen ist dem Impulszeitdiagramm gemäß Fig. 7 und den unter Fig. 4 explizit dargelegten Ablaufschema des Inkrementalzählers entnehmbar.

In der nachstehenden Tabelle ist die zeitliche Zündimpulsfolge und deren möglichen Stiftzuordnungen eines jeden Elektrodenpaares ausgeführt:

| Stiftgruppe | | $Zeitpkt.t_1$ | $Zeitpkt.t_2$ | $Zeitpkt.t_3$ | $Zeitpkt.t_4$ |
|---|---|---|---|---|---|
| I-Stift | 1-3 | 34, 36 | - | 35, usw. | - |
| I-" | 4-6 | 35, usw. | - | 34, 36 | - |
| II-Stift | 1-3 | - | 37, 39 | - | 38, usw. |
| II-" | 4-6 | - | 38, usw. | - | 37, 39 |
| III-Stift | 1-3 | 35, usw. | - | 34, 36 | - |
| III-" | 4-6 | 34, 36 | - | 35, usw. | - |
| IV-Stift | 1-3 | - | 38, usw. | - | 37, 39 |
| IV-" | 4-6 | - | 37, 39 | - | 38, usw. |

Eine weitere praktische Möglichkeit der Querperforationseinrichtung besteht darin, daß in Laufrichtung der Zigarettenpapierbahn durch Änderung der Zündfunkenwiederholungsrate beliebige und durchgehende Porositätsflächenprofile einperforierbar sind.

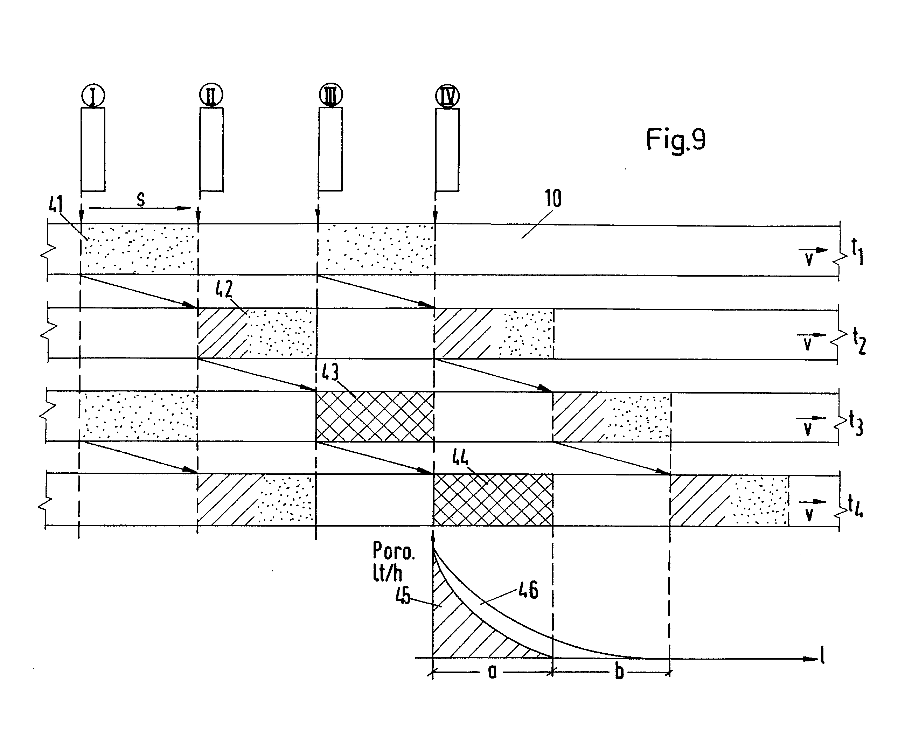

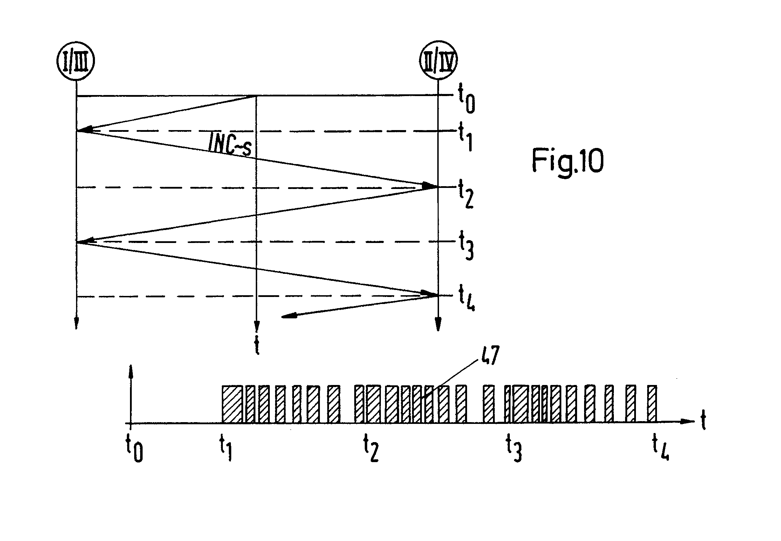

Wie aus Fig. 9 und 10 zu ersehen ist, kann mit Änderung der Zündfunkenwiederholungsrate 47 jedes beliebige Porositätsprofil innerhalb einer jeden Perforationsphase 41-44 in das durchlaufende Zigarettenpapier einperforiert werden. Somit lassen sich bei einer 4-fach-Elektrodenkombination die dargestellte halbe Zigarettenlänge 45 bzw. bei einer 8-fach-Anordnung die gesamte Zigarettenlänge 46 mit jedem gewünschten Porositätsprofils versehen.

Die Vorteile dieser Methode und deren nichtlinearen Porositätsverläufe innerhalb der Zigarettenlänge sind darin begründet, daß nunmehr der Ventilationsgrad und die damit verbundenen Nikotin- und Kondensatanteile unabhängig von der momentanen Zigarettenabbrandlänge nahezu konstant gehalten werden können.

Erfindungsgemäß werden grundsätzlich vier Elektrodenpaare eingesetzt, um eine Vierfachperforation durchzuführen. Es ist leicht einzusehen, daß auch weitere Elektrodenpaare (jeweils ein gerades Vielfaches von zwei) eingesetzt werden können. Sind diese entsprechend angeordnet, so wird der Gesamtperforationsgrad in der gleichen Weise durch Mehrfachperforationen gebildet. Die gleichzeitig gezündeten Elektroden weisen einen verhältnismäßig großen Abstand, nämlich den der entsprechenden Zigarettenlänge auf. Der Abstand der einzelnen Elektroden untereinander ist aber nur halb so groß. Trotz hoher Bahngeschwindigkeit des zu perforierenden Zigarettenpapiers ist so eine intensive und dichte Perforierung bei einem hohen Leistungsvermögen gewährleistet. Die Bewegungsgeschwindigkeit der Bahn ist nicht beschränkt durch den unmittelbaren Abstand zwischen zwei Elektroden, sondern durch den Abstand zwischen jeweils den zwei gleichzeitig gezündeten Elektroden.

## Patentansprüche

1. Verfahren zum elektroerosiven Perforieren von Zigarettenpapier mit Hilfe von Elektroden, zwischen denen das zu perforierende Zigarettenpapier hindurchbewegt wird, gekennzeichnet durch folgende Verfahrensschritte:

   1. Bewegung des Zigarettenpapiers in Zigarettenlängsrichtung zwischen mindestens zwei quer zur Bewegungsrichtung angeordneten, aus Ober- und Unterelektrode bestehenden Elektrodenpaaren;
   2. Anordnung der Elektrodenpaare in einem Abstand von einer Zigarettenlänge;
   3. gleichzeitige Zündung der beiden Elektrodenpaare über eine Wegstrecke bzw.einen Zeitraum, der

EP 0 460 369 A1

in Abhängigkeit von der Transportgeschwindigkeit des Zigarettenpapiers die Perforationsbreite festlegt und erneutes Zünden der Elektrodenpaare nach Zurücklegen des perforierten Bereiches um eine Zigarettenlänge.

2. Verfahren nach Anspruch 1, gekennzeichnet durch folgende Verfahrensschritte:
1. Bewegung des Zigarettenpapiers in Zigarettenlängsrichtung zwischen mindestens vier oder einem weiteren geraden Vielfachen von zwei quer zur Bewegungsrichtung angeordneten, aus Ober- und Unterelektrode bestehenden Elektrodenpaaren;
2. Anordnung der Elektrodenpaare in einem Abstand von einer halben Zigarettenlänge;
3. gleichzeitige Zündung des ersten und dritten Elektrodenpaares (und des ggf. jeweils übernächsten Elektrodenpaares) und zeitsynchrone Zündung des zweiten und vierten Elektrodenpaares (und des ggf. jeweils übernächsten Elektrodenpaares) nach Zurücklegen des zu perforierendend Zigarettenpapiers um eine halbe Zigarettenlänge.

3. Vorrichtung zum elektroerosiven Perforieren von Zigarettenpapier mit Hilfe von Elektroden, zwischen denen das Zigarettenpapier hindurchbewegbar ist, gekennzeichnet durch folgende Merkmale:
1. die aus oberer und unterer Elektrode bestehenden Elektrodenpaare (I,III) sind quer zu dem in Zigarettenlängsrichtung zwischen ihnen hindurchbewegten Zigarettenpapier angeordnet;
2. es sind mindestens zwei Elektrodenpaare jeweils in einem Abstand von einer Zigarettenlänge vorgesehen;
3. die beiden Elektrodenpaare (I,III) sind gleichzeitig über einen Zeitraum zündbar, der in Abhängigkeit von der Transportgeschwindigkeit der Zigarettenbahn die Perforationsbreite festlegt und nach Zurücklegen des perforierten Zigarettenpapiers um eine Zigarettenlänge erneut zündbar.

4. Vorrichtung nach Anspruch 3, dadurch gekennzeichnet, daß die Elektrodenpaare (I - IV) in an sich bekannter Weise Entladungsstifte (20) aufweisen, die quer zur Bewegungsrichtung des zu perforierenden Zigarettenpapiers (10) verlaufen.

5. Vorrichtung nach Anspruch 4, dadurch gekennzeichnet, daß die Elektrodenpaare (I - IV) mit den Entladungsstiften (20) quer zur Bewegungsrichtung des zu perforierenden Zigarettenpapiers (10) verstellbar sind.

6. Vorrichtung nach einem der Ansprüche 3 bis 5, dadurch gekennzeichnet, daß zur Steuerung der Zündung der Elektrodenpaare (I und III; II und IV) ein durch das bewegte Zigarettenpapier (10) betätigter Wegstreckenzähler (18) mit Initiator (19) vorgesehen ist.

# Fig.1

14

13

1 bis 6

11

10

9

12

15

16

17

1 bis 6

20

EP 0 460 369 A1

# Fig.2

EP 0 460 369 A1

EP 0 460 369 A1

Ⓘ   Ⓘ   Ⓘ   Ⓘ

I   II   III   IV

s

Fig.3

10

$v \longrightarrow$   $t_1$

$v \longrightarrow$   $t_2$

$v \longrightarrow$   $t_3$

$v \longrightarrow$   $t_4$

a+b

Zone 2            21  Zone1

Perforationsgrad.

einfach   doppelt   dreifach   vierfach

# Fig.4

Fig.5

Fig.6

Fig.7

EP 0 460 369 A1

## Fig.8

Fig.9

Fig.10

| | **EINSCHLÄGIGE DOKUMENTE** | | EP 91104988.0 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
| D,A | EP - A2 - 0 056 223 (TANN-PAPIER GESELLSCHAFT M.B.H.) * Seite 5, Zeile 14 - Seite 6, Zeile 31; Fig. 1 * -- | 1,3 | B 26 F 1/28 |
| A | DE - A1 - 3 332 886 (SASIB S.P.A) * Seite 8, Zeile 33 - Seite 9, Zeile 20; Seite 10, Zeile 35 - Seite 11, Zeile 27; Fig. 1,2 * -- | 1,3,5 | |
| A | EP - A1 - 0 007 488 (SCHMIDT-KUFEKE) * Gesamt * ---- | 1,3,4 | |

| RECHERCHIERTE SACHGEBIETE (Int. Cl.⁵) |
|---|
| A 24 C 5/00 A 24 D 1/00 A 24 D 3/00 B 26 F 1/00 H 05 B 7/00 |

Der vorliegende Recherchenbericht wurde für alle Patentansprüche erstellt.

| Recherchenort | Abschlußdatum der Recherche | Prüfer |
|---|---|---|
| WIEN | 09-08-1991 | VELINSKY-HUB |